# EUROPÄISCHE PATENTANMELDUNG

(11) **EP 1 944 597 A1**
(43) Veröffentlichungstag der Anmeldung: **16.07.2008**
(21) Anmeldenummer: 07000615.0
(22) Anmeldetag: 12.01.2007
(51) Int. Cl.: G01L 9/00, G01L 19/14

(54) **Elektrische Drucksensorvorrichtung**

(71) Anmelder: Fraunhofer-Gesellschaft zur Förderung der angewandten Forschung e.V., 80686 München (DE); Universität Duisburg-Essen, 47057 Duisburg (DE)
(72) Erfinder: Trieu, Hoc-Khiem, 47475 Kamp-Lintfort (DE); Schelle, Burkhard, 46149 Oberhausen (DE); Slotkowski, Johann, 58313 Herdecke (DE); Ünlübayir, Sinan, 44799 Bochum (DE)
(74) Vertreter: Zinkler, Franz

(57) **Zusammenfassung**

Eine Drucksensorvorrichtung umfasst ein Drucksensorgehäuse, einen elektrischen Komponententräger (6) mit Leitungen, ein Drucksensorelement (10), das an dem Komponententräger (6) angebracht ist sowie eine Arretiervorrichtung (7) zum Festlegen des Komponententrägers (6) gegenüber dem Drucksensorgehäuse (1) sowie eine Abdichtvorrichtung (8) zum Abdichten des Komponententrägers (6) gegenüber dem Drucksensorgehäuse (1). Leitungen des Komponententrägers (6) erstrecken sich von einer zwischen dem Komponententräger (6) und dem Drucksensorgehäuse (1) gebildeten Kavität (9) bis zu einem Anschlussbereich außerhalb der Kavität (9).

## Beschreibung

Die vorliegende Erfindung befasst sich mit einer Drucksensorvorrichtung. Insbesondere bezieht sich die Erfindung auf eine elektrische Drucksensorvorrichtung, die für Druckmessungen bis zu 1000 bar geeignet ist.

Elektrische Drucksensoren existieren in unterschiedlichen Ausführungen. Jedoch sind die bisherigen Lösungen hierfür wegen ihrer Größe und Komplexität aufwendig, und auch kostspielig in der Herstellung. Die meisten Lösungen bestehen aus einer größeren Anzahl von Einzelteilen wie beispielsweise in US 5,827,972, US 4,128,006, US 5,438,877 oder US 7,040,174 gezeigt. Zudem verwenden die meisten bisherigen Lösungen elektrische Kontaktzuleitungen mit verklebten oder verschmolzenen Durchführungen, wie beispielsweise in US 5,604,363 oder US 5,444,286 gezeigt. Diesen Nachteil haben geschmolzene Glasdurchführungen nicht, dafür sind letztere kostspielig in der Herstellung.

Die Aufgabe der vorliegenden Erfindung besteht folglich darin, eine kostengünstige Drucksensorvorrichtung aufzuzeigen, welche einfach und kompakt in ihrer Ausführung ist.

Diese Aufgabe wird durch eine Drucksensorvorrichtung gemäß Anspruch 1 gelöst.

Der vorliegenden Erfindung liegt die Erkenntnis zugrunde, dass mit Hilfe eines elektrischen Komponententrägers, wie z. B. einer Platine, die elektrischen Anschlüsse zum Drucksensorelement einfach und kostengünstig realisiert werden können, wenn nach dem erfindungsgemäßen Konzept ein Komponententräger mit Leitungen und mit einem Drucksensorelement versehen ist, welches an dem Komponententräger angebracht ist, wobei der Komponententräger mittels einer Arretiervorrichtung an dem Drucksensorgehäuse angebracht ist, wobei eine Vorrichtung zum Abdichten einer Kavität, die zwischen dem Drucksensorgehäuse und dem Komponententräger gebildet ist, vorgesehen ist, wobei sich die Leitungen des Komponententrägers von der zwischen dem Komponententräger und dem Drucksensorgehäuse gebildeten Kavität bis zu einem Bereich außerhalb der Kavität erstrecken, indem ein Anschluss an den Komponententräger in einfacher Weise vorgenommen werden kann.

Aufgrund der Struktur der erfindungsgemäßen Drucksensorvorrichtung sind Einzeldichtungen jedes elektrischen Anschlusses, wie Glasdurchführungen oder O-Ring-Dichtungen, entbehrlich.

Zudem kann die Drucksensorvorrichtung leicht zusammengebaut und auch leicht in ihre einzelnen Komponenten zerlegt werden. Dies erleichtert die Wartung und den Test des Drucksensorelements. Eine erfindungsgemäße Drucksensorvorrichtung besteht im Wesentlichen aus lediglich drei Einzelteilen. Ferner sind zu ihrer Herstellung nur handelsübliche Standardkomponenten nötig, was die Herstellung der Drucksensorvorrichtung besonders kostengünstig macht. Durch den kompakten und stabilen Aufbau ist der Einsatz der Drucksensorvorrichtung bis zu Drücken von 1000 bar möglich.

Bevorzugte Ausführungsbeispiel der vorliegenden Erfindung werden nachfolgend Bezug nehmend auf die beiliegenden Zeichnungen näher erläutert. Es zeigen:
- Fig. 1: eine erfindungsgemäße Drucksensorvorrichtung im Axialschnitt;
- Fig. 2: eine erfindungsgemäße Drucksensorvorrichtung im Axialschnitt;
- Fig. 3: eine Aufsicht einer erfindungsgemäßen Drucksensorvorrichtung;
- Fig. 4: ein weiteres Ausführungsbeispiel einer Drucksensorvorrichtung der vorliegenden Erfindung im Axialschnitt;
- Fig. 5: eine Draufsichtdarstellung des in Fig. 4 gezeigten Ausführungsbeispiels; und
- Fig. 6: ein weiteres Ausführungsbeispiel einer Drucksensorvorrichtung der vorliegenden Erfindung im Axialschnitt.

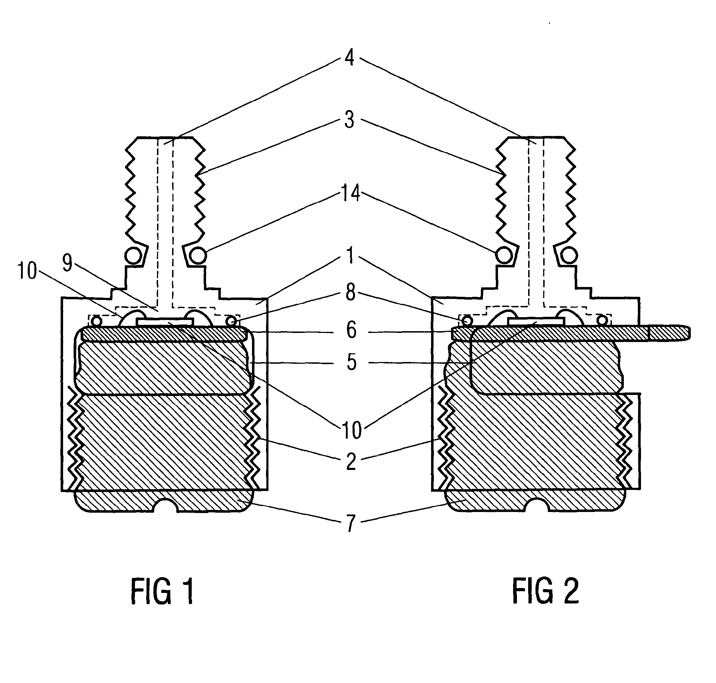

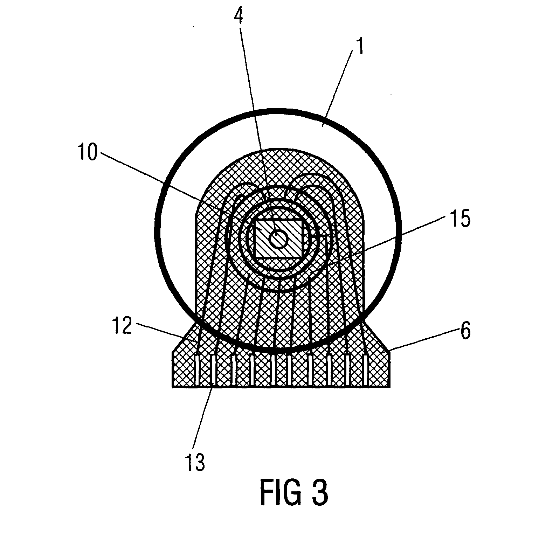

Ein in den Figuren 1, 2 und 3 gezeigtes erstes Ausführungsbeispiel der erfindungsgemäßen Drucksensorvorrichtung umfasst ein Gehäuse 1, das beispielsweise aus Edelstahl oder Kunststoff besteht, welches mit einem Innengewinde 2 und einem Außengewinde 3 versehen ist. Das Gehäuse 1 weist zentralsymmetrisch in Längsrichtung einen Kanal 4 sowie ein Fenster 5 an seiner Seitenwand auf. Ein elektrischer Komponententräger 6, der vorzugsweise als Platine ausgeführt ist, die aus dem Material FR4 besteht, ist durch das Fenster 6 in das Gehäuse 1 eingeführt und wird gegenüber dem Gehäuse 1 durch eine mechanische Arretiervorrichtung gehalten, die bei dem gezeigten Ausführungsbeispiel als Druckschraube 7 implementiert ist.

Zwischen dem Gehäuse 1 und der Platine 6 befindet sich ein O-Ring 8, gegen den, vermittelt durch den Anpressdruck der Druckschraube 7, die Platine 6 gepresst wird. In eine Kavität 9 zwischen dem Gehäuse 1 und der Platine 6, welche bei dem gezeigten Ausführungsbeispiel durch den O-Ring 8 abgedichtet wird, ist auf der Platine eine Drucksensorvorrichtung montiert, die als ein Drucksensorchip 10 ausgeführt sein kann.

Vorzugsweise ist der Drucksensorchip 10 durch Verkleben auf der Platine 6 fixiert. Eine elektrische Verbindung zwischen dem Drucksensor 10 und Bondpads 15 auf der Platine ist durch Bonddrähte 11 realisiert.

Alternativ kann der Drucksensorchip 10 mit der Platine 6 in Flip-Chip-Technologie integriert sein. Ebenfalls ist es möglich, für den Drucksensorchip 10 und die Platine 6 die sogenannte MID-Technik (Molded Interconnect Device) anzuwenden.

Elektrische Zuleitungen zum Drucksensorchip 10 werden durch beispielsweise aus Kupfer bestehende Leitungen 12 auf der Platine 6 oder innerhalb der Platine 6 bis zu einem Bereich außerhalb der Kavität 9 herausgeführt. Dort ist ein Abgriff der Leitungen mittels Kontakten 13 vorgesehen.

Der Druck des zu messenden Mediums wird durch den Kanal 4 in die Kavität 9 geführt und kann dort durch den Drucksensorchip 10 erfasst werden.

Durch das Außengewinde 3 und einen Dichtungsring 14 kann die Drucksensorvorrichtung gemäß dem gezeigten bevorzugten Ausführungsbeispiel an einem zu messenden System angeschraubt werden.

Die erfindungsgemäße Drucksensorvorrichtung eignet sich für vielfältige Anwendungsgebiete. Sie eignet sich insbesondere für alle technischen Aufgaben, bei denen es darum geht, Drücke ortsnah zu messen. Hierbei kann ein Einsatz in Druckbereichen von bis zu 1000 bar erfolgen. Die Art des in das Drucksensorgehäuse eingebauten Drucksensors bzw. des Drucksensorchips 10 bestimmt den spezifischen Einsatzbereich der erfindungsgemäßen Drucksensorvorrichtung. Typische Anwendungsbeispiele der erfindungsgemäßen Drucksensorvorrichtung sind Druckmessungen im Automobilbereich oder auch bei Hydraulikmaschinen.

Bei dem oben beschriebenen, bevorzugten Ausführungsbeispiel erfolgt das Herausziehen der Kontaktierungsbereiche in einem Bereich außerhalb der Kavität durch die Leitungen, die innerhalb des Komponententrägers 6 vorgesehen sind.

Anstelle einer derartigen Kontaktierungsform können andere elektrische Verbindungen im Zusammenhang mit der erfindungsgemäßen Drucksensorvorrichtung ausgeführt werden. In Abweichung von dem gezeigten Ausführungsbeispiel ist es möglich, dass sich die Platine 6 nicht aus dem Fenster 5 heraus bis zu einem Bereich außerhalb der Kavität erstreckt, wobei in diesem Fall elektrische Anschlüsse durch Kabel aus dem Gehäuse 1 herausgeführt werden.

In weiterer Abweichung von dem beschriebenen Ausführungsbeispiel ist es möglich, anstelle einer Platine einen anderen elektrischen Komponententräger 6 einzusetzen, der beispielsweise als Keramiksubstrat oder Flextape ausgebildet sein kann.

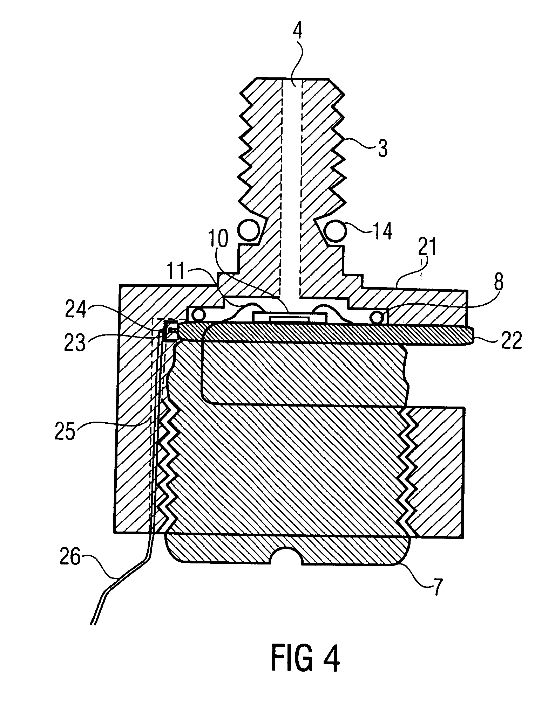

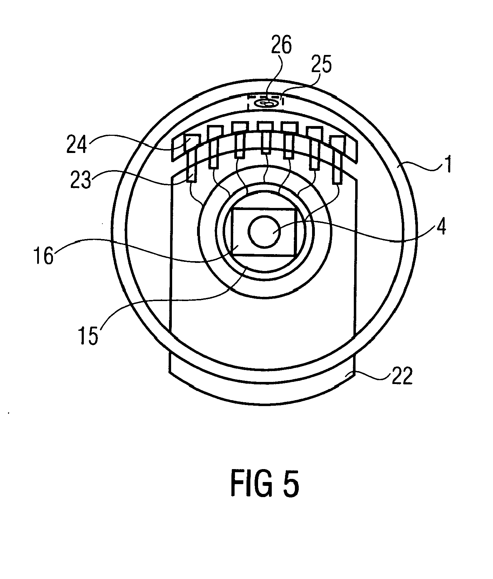

Die Figuren 4 und 5 zeigen eine Schnittdarstellung und eine Draufsichtdarstellung einer anderen Ausführungsform der erfindungsgemäßen Drucksensorvorrichtung. Diejenigen Teile und Komponenten des Ausführungsbeispiels gemäß den Figuren 4 und 5, die mit dem erstgenannten Ausführungsbeispiel nach den Figuren 1 bis 3 übereinstimmen, sind mit gleichen Bezugszeichen bezeichnet, so dass eine erneute Beschreibung der entsprechenden Komponenten unterbleiben kann. Bei dem zweiten Ausführungsbeispiel nach den Figuren 4 und 5 weist das Gehäuse 1 asymmetrisch in Längsrichtung einen Kanal oder Schlitz 25 im Bereich des Innengewindes 2 auf. In einer hiervon abweichenden, nicht gezeigten Ausführungsform kann der elektrische Anschluss auch über ein Kabel erfolgen, das seitlich aus dem Gehäuse 1 herausgeführt wird.

Die elektrischen Leitungen 26 können in einem Kanal oder Schlitz beispielsweise durch Verkleben befestigt sein, um ein Anschrauben der Druckschraube problemlos auch bei diesem Ausführungsbeispiel zu ermöglichen. Die elektrischen Leitungen 26 sind über Anschlüsse 23 und 24 an Leitungen 12 des Komponententrägers 22 angeschlossen.

Anstelle der Arretierung des Komponententrägers gegenüber dem Gehäuse mittels einer Druckschraube ist es möglich, die mechanische Arretierung durch einen Keil, durch Schweißen oder Kleben zu realisieren.

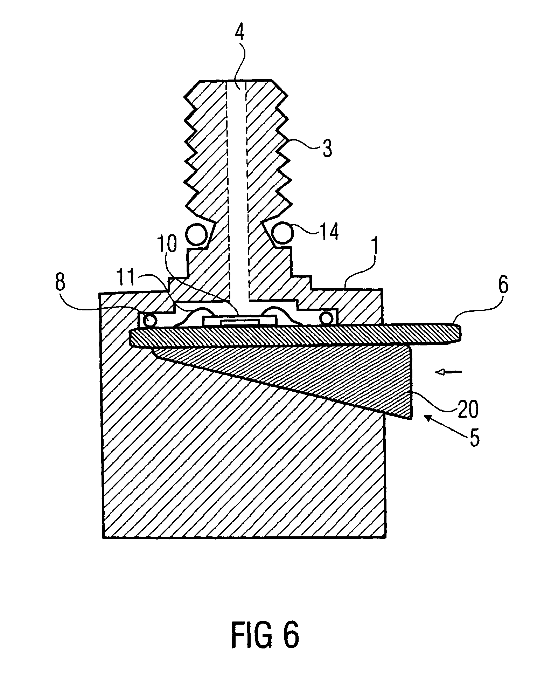

Fig. 6 zeigt ein weiteres Ausführungsbeispiel einer erfindungsgemäßen Drucksensorvorrichtung, bei der die Arreitiervorrichtung durch einen Keil 20 gebildet ist. Das Fenster 5 des Gehäuses 1 hat in diesem Fall eine dem Keil 20 angepasste Form. Der Keil kann nach seinem Anführen in das Gehäuse 1 und nach dem Anpressen des Komponententrägers 6 gegen den O-Ring 8 und das Gehäuse 1 in seiner Lage entweder durch einen Klemmsitz oder durch Verkleben befestigt werden. Optional kann das Gehäuse 1 an seiner in Fig.6 rechten Seite durch eine (nicht gezeigte) Klammer verstärkt sein, die die mechanische Schwächung durch die Ausnehmung für den Keil 20 Kompensiert.

Bei den gezeigten Ausführungsbeispielen trägt der Komponententräger lediglich einen einzigen Drucksensorchip. Für den Fachmann ist es jedoch offenkundig, dass anstelle des einzigen Drucksensorchips auch mehrere Drucksensorchips oder ein Drucksensorchip zusammen mit Auswertungselektronik oder gehäuste Drucksensorchips auf dem Komponententräger 6 befestigt und mit dessen Leitungen verbunden sein können.

## Patentansprüche

1. Drucksensorvorrichtung mit folgenden Merkmalen:
einem elektrischen Komponententräger (6) mit Leitungen (12)
einem Drucksensorgehäuse (1);
einem Drucksensorelement (10), das an dem Komponententräger (6) angebracht ist;
einer Arretiervorrichtung zum Festlegen des Komponententrägers (6) gegenüber dem Drucksensorgehäuse (1); und
einer Abdichtvorrichtung zum Abdichten des Komponententrägers (6) gegenüber dem Drucksensorgehäuse (1); wobei sich die Leitungen (12) des Komponententrägers (6) von einer zwischen dem Komponententräger (6) und dem Drucksensorgehäuse (1) gebildeten Kavität (9) bis zu einem Bereich außerhalb der Kavität (9) erstrecken; und
wobei das Drucksensorelement (10) mit den Leitungen (12) innerhalb der Kavität (9) verbunden ist.

2. Drucksensorvorrichtung nach Anspruch 1, bei der das Drucksensorgehäuse (1) ein Fenster (5) aufweist, und bei der der Komponententräger (6) sich durch das Fenster (5) bis in einen Bereich außerhalb des Drucksensorgehäuses (1) erstreckt.

3. Drucksensorvorrichtung nach Anspruch 1 oder 2, bei der das Drucksensorelement (10) derart mit dem Komponententräger (6) verbunden ist, dass zwischen dem Drucksensorelement (10) und dem Komponententräger (22) ein Referenzdruckhohlraum gebildet ist.

4. Drucksensorvorrichtung nach einem der Ansprüche 1 bis 3, bei der die Arretiervorrichtung durch eine Schraube (7) realisiert ist; und
das Drucksensorgehäuse (1) ein Gewinde (2) zur Führung der Schraube (7) aufweist.

5. Drucksensorvorrichtung nach Anspruch 4, bei der die Schraube (7) den Komponententräger (6) gegen die Abdichtvorrichtung drückt.

6. Drucksensorvorrichtung nach Anspruch 5, bei der die Abdichtvorrichtung durch einen O-Ring (8) gebildet ist.

7. Drucksensorvorrichtung nach Anspruch 5, bei der die Abdichtvorrichtung durch den Komponententräger (6) gebildet ist.

8. Drucksensorvorrichtung nach einem der Ansprüche 1 bis 3, bei der die Arretiervorrichtung durch einen Keil (20) gebildet ist.

9. Drucksensorvorrichtung nach einem der Anspruche 1 bis 8, bei der das Drucksensorgehäuse (1) einen Kanal oder einen Schlitz im Innengewinde (2) aufweist.
